# EUROPEAN PATENT APPLICATION

(11) **EP 4 332 018 A1**
(43) Date of publication of application: **06.03.2024**
(21) Application number: 22795858.4
(22) Date of filing: 27.04.2022
(51) Int. Cl.: B65D 81/26

(54) **COFFEE-PRESERVING BAG BODY AND METHOD FOR PRESERVING COFFEE**

(30) Priority: 28.04.2021 JP 2021076533
(71) Applicant: W & CO., Tokyo 150-0011 (JP)
(72) Inventor: WATANABE, Toru, Tokyo 150-0011 (JP)
(74) Representative: Von Rohr Patentanwälte Partnerschaft mbB
(86) International application number: PCT/JP2022/019126
(87) International publication number: WO 2022/230945

(57) **Abstract**

Provided is a coffee storage bag and method capable of discharging carbon dioxide generated inside the bag while preventing the intrusion of oxygen from the outside.

The coffee storage bag 10 is designed to store 500 g or less of coffee, and comprises a strip-shaped sealed portion 12 extending approximately parallel to an edge of the bag along which two overlapped end sections of a film 1 are joined together, and having a width of 5 mm to 15 mm, wherein the strip-shaped sealed portion includes a single non-joined portion 20 in which the two overlapped end sections of the film is not joined together, wherein the non-joined portion forms a single vent passage communicating the inside and the outside of the bag. The vent passage has a length of 100 mm to 400 mm, and a width of 0.5 mm to 3 mm.

## Description

### TECHNICAL FIELD

### TECHNICAL FIELD

The present invention relates to a coffee storage bag and a coffee storage method, and more specifically to a bag and a method for storing coffee while allowing carbon dioxide generated inside of the bag to be discharged outside of the bag and preventing deterioration of the coffee inside of the bag.

### BACKGROUND ART

Since the quality of coffee will deteriorate if oxygen contacts the coffee during storage, it is necessary to prevent oxygen from intruding into a storage bag for the coffee from the outside. On the other hand, since carbon dioxide generated from the coffee during storage causes expansion of the bag and can cause burst of the bag in some situations, the carbon dioxide generated from the coffee inside of the bag during storage needs to be discharged to the outside of the bag.

In order to satisfy the above two conflicting requirements, a technique of attaching a check valve to a bag for storing coffee has been implemented. However, this technique has a problem that the check valve is expensive, and the bag with the check valve attached thereto requires a complicated production process.

In order to cope with such a problem, there has been proposed a bag for coffee beans or the like, wherein the bag has a small hole covered with a non-woven fabric (Patent Document 1).

### CITATION LIST

### [Patent Document]

Patent Document 1: JP-U 3074985

### SUMMARY OF INVENTION

### [Technical Problem]

However, the bag for coffee beans or the like, disclosed in Patent Document 1, can exhaust carbon dioxide from the inside of the bag, but cannot sufficiently prevent intrusion of oxygen from the outside. Therefore, coffee could not be stored without deterioration for a long period of time.

The present invention has been made in view of the above circumstance, and an object of the present invention is to provide a coffee storage bag capable of discharging carbon dioxide generated inside of the bag while preventing the intrusion of oxygen from the outside.

It is another object of the present invention to provide a coffee storage method capable of avoiding deterioration in the quality of coffee due to oxygen intruding from the outside, and damage to the bag due to carbon dioxide generated inside the bag.

### [Means for Solving the Problem]

According to a first aspect of the present invention, there is provided a coffee storage bag for storing 500 g or less of coffee. The coffee storage bag comprises a strip-shaped sealed portion extending approximately parallel to an edge of the bag along, formed by tow two end sections of a film are overlapped are joined together, and having a width of 5 mm to 15 mm, wherein the strip-shaped sealed portion includes a single non-joined portion in which the two overlapped end sections of the film is not joined together in part, wherein the non-joined portion forms a single vent passage communicating an inside and an outside of the bag. The vent passage has a length of 100 mm to 400 mm, and a width of 0.5 mm to 3 mm.

As used in this specification, the term "coffee" includes coffee in the form of roasted beans (coffee beams), and coffee in the form of powder or grains obtained by grinding roasted beans.

According to the above feature, it becomes possible to allow carbon dioxide generated from the coffee inside of the bag to be discharged to the outside of the bag, while preventing the intrusion of oxygen from the outside, thereby storing the coffee without deterioration for a long period of time.

In a preferred embodiment of the first aspect of the present invention, the film is composed of a barrier film.

According to this feature, it also becomes possible to prevent intrusion of oxygen through the surface of the bag.

In another preferred embodiment of the first aspect of the present invention, a ratio of an area of the vent passage to an area of the strip-shaped sealed portion is 0.05 to 0.50.

This area ratio means a ratio between the two areas in plan view.

According to this feature, it becomes possible to satisfy both ensuring of joining strength of the strip-shaped sealed portion, and discharge of carbon dioxide.

In yet another preferred embodiment of the first aspect of the present invention, the strip-shaped sealed portion is an ultrasonically joined portion formed by joining the overlapped end sections of the film by means of ultrasonic joining.

According to this feature, it becomes possible to form the vent passage with accurate size and shape.

According to a second aspect of the present invention, there is provided a coffee storage method comprising the step of storing 60 g to 500g of coffee in the above coffee storage bag.

According to this feature, carbon dioxide generated from 60 g to 500g of coffee can be discharged to the outside via the vent passage of the coffee storage bag, so that it becomes possible to store the coffee without deterioration for a long period of time.

In another preferred embodiment of the second aspect of the present invention, the step of storing is performed in a state in which nitrogen gas is charged inside the bag.

According to this feature, it becomes possible to more effectively prevent deterioration of the coffee by the nitrogen gas charged inside the bag.

### [Effect of Invention]

The coffee storage bag of the present invention can discharge carbon dioxide generated inside of the bag, while preventing the intrusion of oxygen from the outside.

Further, the coffee storage method of the present invention can store 60 g to 500g of coffee without deterioration for a long period of time.

As mentioned above, the coffee storage bag of the present invention can be used to satisfy both discharge of carbon dioxide generated from a content, and reduction of the intrusion of oxygen from the outside. As a result, it is possible to store coffee without deterioration in the quality for a long period of time. This mechanism is assumed to be as follows.

When coffee is stored in the bag, a large amount of carbon dioxide is generated from the coffee in the early stages of storage. As a result, a pressure inside of the bag increases and becomes higher than that of the outside air. Then, this pressure difference enables the gas inside of the bag to be discharged to the outside through the vent passage. This gas behaves as so-called "fluid", i.e., is quickly discharged according to the pressure difference. As a result, the bag is prevented from being largely expanded.

Here, since carbon dioxide has been generated inside the bag, the gas in the bag has a reduced oxygen concentration and an increased carbon dioxide concentration. Thus, the coffee in the bag is stored in a gas having a relatively low oxygen concentration, which suppresses deterioration (oxidation) of the coffee.

On the other hand, as time passes, the amount of carbon dioxide generated from the coffee will gradually decrease. Thus, the pressure difference between the inside and outside of the bag will gradually decrease, and will eventually disappear. In this state, if oxygen intrudes into the bag through the vent passage, deterioration of the coffee will progress. However, in the bag of the present invention, the intrusion speed of oxygen is extremely small for the following reasons.

In a state in which the pressure difference disappears, the vent passage is also filled with gas with a relatively large percentage of carbon dioxide. However, since the vent passage in the present invention has a relatively small width, almost no convection occurs in the gas in the vent passage. Thus, almost no intrusion of oxygen according to convection occurs.

Therefore, the intrusion of oxygen from the outside into the bag is caused only by "diffusion of oxygen molecules inside the vent passage". However, the intrusion speed of oxygen by diffusion is extremely slow, so that it becomes difficult for oxygen to intrude into the inside of the bag.

As a result, the intrusion of oxygen into the inside of the bag is extremely reduced, so that it becomes possible to keep the oxygen concentration inside the bag low, and realize storage of the coffee with suppressed deterioration thereof.

### BRIEF DESCRIPTION OF DRAWINGS

FIG. 1 is a schematic plan view of a bag according to a preferred embodiment of the present invention.
FIG. 2 is a diagram schematically showing the configuration of a welding apparatus (ultrasonic jointing machine) used for production of the bag according to this embodiment.
FIG. 3 is a schematic perspective view showing the configuration of an anvil used in the ultrasonic jointing machine in FIG. 2.
FIG. 4 is a schematic plan view of a bag according to another embodiment of the present invention.
FIG. 5 is a schematic plan view of a bag according to yet another embodiment of the present invention.
FIG. 6 is a schematic plan view of a bag according to still another embodiment of the present invention.
FIG. 7 is a table showing a result obtained by storing coffee using each example of the present invention.

### DESCRIPTION OF EMBODIMENTS

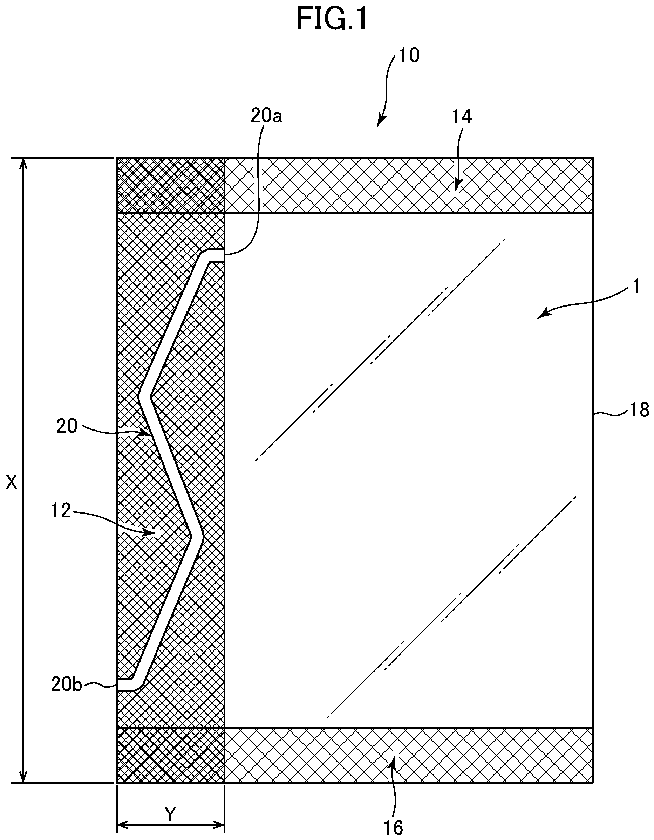

A bag 10 according to a preferred embodiment will now be described in detail along with the drawings. FIG. 1 is a schematic plan view of the bag 10 according to the preferred embodiment of the present invention. In this application, dimensional ratios among elements are not represented exactly in the drawings, for the sake of clarification of the drawings.

The bag 10 according to this embodiment is a coffee storage bag for receiving and storing 500g or less, e.g., 60g to 500g, of coffee. Although the size of the bag 10 according to this embodiment is not particularly limited, the bag 10 may be preferably formed to have, e.g., a length of about 10 to 60 cm and a width of about 10 to 40 cm.

The bag 10 according to this embodiment has a shape obtained by folding a single rectangular film in two such that each pair of two opposite side end sections, two halves of a top end section and two halves of a bottom end section are overlapped each other. The overlapped side end sections are joined together by means of ultrasonic welding (joining) so as to form a strip-shaped side sealed portion (strip-shaped sealed portion) 12. On the other hand, each pair of the overlapped top end sections and the overlapped bottom end sections are joined together by means of, e.g., heat sealing so as to form a top sealed portion 14 and a bottom sealed portion 16, respectively

Therefore, the bag 10 is internally formed with a coffee-receiving space having four sides surrounded by a folded portion 18, the side sealed portion 12, the top sealed portion 14 and the bottom sealed portion 16.

In this bag 10, the side sealed portion 12 and the bottom sealed portion 16 are first formed, and in this state, coffee is put into the inside of the bag 10, whereafter the top sealed portion 14 is formed to close the bag 10.

The type of film used for forming the bag 10 according to this embodiment is not particularly limited, and any type of film and any of heretofore-known films may be used as long as it can join the overlapped end sections of the film by means of ultrasonic welding. Specific examples of the film include polyethylene, polypropylene, acrylic resin, vinyl chloride, and copolymers of two or more thereof. Further, the film may be a laminate film obtained by laminating different material together.

Further, an oxygen barrier film is preferably used as the film constituting the bag 10 according to this embodiment. Specifically, it is possible to use any of heretofore-known oxygen barrier films, such as: a film made of a polymer comprising vinyl alcohol or vinylidene chloride, as a constituent; a polymer film on which one of silica, alumina and aluminum is vapor-deposited, and a metal foil layer.

Further, it is possible to use a laminate film obtained by laminating a substrate film and an oxygen barrier film together, and a film obtained by providing an oxygen barrier coat on a substrate film. In this case, as the substrate film, it is possible to use a film obtained by providing a barrier coat layer and/or a sealant layer to a paper, e.g., "SILBIO BARRIER (registered trademark)".

The film used for the bag 10 according to this embodiment preferably has a thickness of 15 µm to 150 µm, more preferably 20 µm to 100 µm. If the thickness of the film is less than 15 µm, the strength of the bag is likely to become insufficient. On the other hand, if the thickness of the film is greater than 150 µm, it can be disadvantageous in terms of cost.

The film used for the bag 10 according to this embodiment may be transparent or may be opaque. However, in order to prevent deterioration of a content due to sunlight, it is desirable to use an opaque packaging film. Further, a film having a printed surface may be used to provide enhanced aesthetic quality.

In the bag 10 according to this embodiment, for example, the width of each of the top sealed portion 14 and the bottom sealed portion 16 is preferably set to 5 mm to 20 mm, more preferably 7 mm to 15 mm. The width of the top sealed portion 14 should be set to 5 mm or more to make it possible to maintain sealing strength, and should be set to 20 mm or less to make it possible to ensure uniform joining.

The overlapped end sections of the double-folded film 1 corresponding to each of the top sealed portion 14 and the bottom sealed portion 16 are entirely joined together by means of, e.g., heat sealing, and formed as a gastight structure.

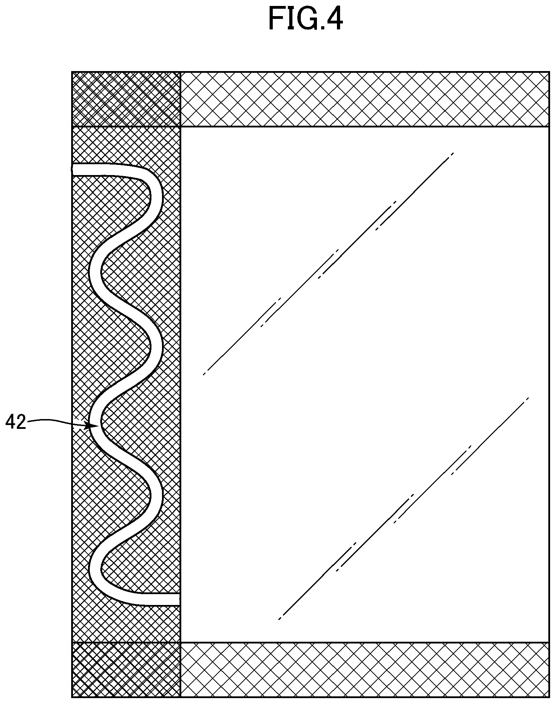

On the other hand, the side sealed portion (strip-shaped sealed portion) 12 is provided with a single vent passage 20 composed of a non-joined portion in which the overlapped end sections of the double-folded film 1 corresponding to the side sealed portion 12 are in a non-joined (separated) state. The strip-shaped sealed portion preferably has a width of 5 mm to 15 mm, more preferably 7 mm to 12 mm. The width of the strip-shaped sealed portion should be set to 5 mm or more to make it easier to ensure a required length of the vent passage. The width of the strip-shaped sealed portion should also be set to 15 mm or less to make it possible to obtain an aesthetically desirable bag. The shape of the vent passage is not particularly limited. For example, it may be: a shape comprising a plurality of straight parts adjacent ones of which are connected by a bent part, as illustrated in FIG. 1; a curved shape illustrated in FIG. 4; or any other shape.

The vent passage 20 is configured to have one end 20a and the other end 20b which are opened, respectively, to the internal space of the bag 10 and an external space of the bag 10, thereby communicating the internal space and the external space of the bag 10. Thus, when the bag 10 is in the closed state, the internal space and the external space communicate with each other only through the vent passage 20.

In the bag 10 according to this embodiment, the length of the vent passage 20 is set to 100 mm to 400 mm. This length is more preferably 120 mm to 350 mm, further preferably 135 mm to 300 mm. The length of the vent passage 20 should be set to 100 mm or more to make it possible to sufficiently suppress the intrusion of oxygen, and should be set to 400 or less to make it possible to ensure the joining strength of the side sealed portion 12.

In the bag 10 according to this embodiment, the width of the vent passage is set to 0.5 mm to 3 mm. This width is more preferably 0.8 mm to 2.5 mm, further preferably 1 mm to 2.0 mm. If the width of the vent passage 20 is less than 0.5 mm, it becomes difficult to form a vent passage with a uniform width, in some cases. The width of the vent passage 20 should be set to 3 mm or less to make it possible to prevent the intrusion of oxygen and sufficiently discharge carbon dioxide, thereby suppressing deterioration in the quality of coffee beans.

Further, the vent passage with the above size should be provided singularly (by a number of one) to make it possible to sufficiently suppress deterioration of coffee.

In the bag 10 according to this embodiment, the ratio of the area s of the vent passage 20 to the area S of the strip-shaped sealed portion 12 in plan view is set to 0.05 to 0.50. This ratio is more preferably 0.07 to 0.45, further preferably 0.10 to 0.40.

The above ratio should be set to 0.05 or more to make it possible to form a vent passage with a sufficient length, thereby sufficiently suppress deterioration in the quality of coffee. The above ratio should also be set to 0.50 or less to make it possible to form the strip-shaped sealed portion 12 at high speeds by ultrasonic welding, while maintaining joining strength, thereby efficiently produce the bag.

It should be noted that the area S of the strip-shaped sealed portion 12 means the product of the longitudinal length X of the strip-shaped sealed portion 12 and the lateral (widthwise) length Y of the strip-shaped sealed portion 12, as shown in FIG. 1. Here, the area of a non-joined portion which does not constitute the vent passage as in the after-mentioned example is excluded from the area S of the strip-shaped sealed portion 12. The longitudinal length X is a length including overlapping parts with the top sealed portion 14 and the bottom sealed portion 16, as shown in FIG. 1.

Next, a production method for the bag 10 will be described.

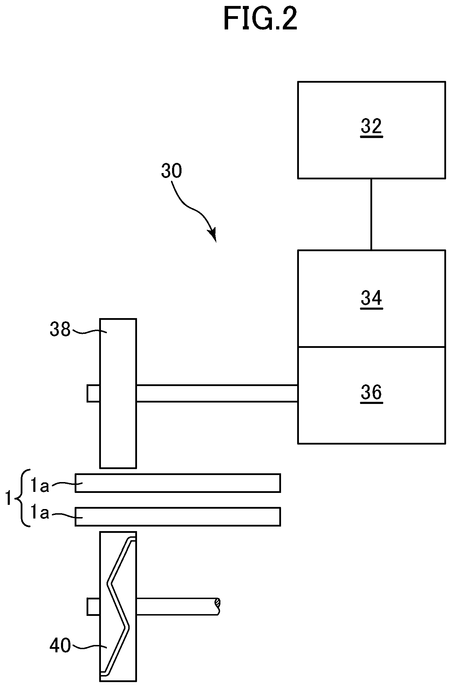

First, a welding apparatus used for an ultrasonic welding method in this production method will be described. FIG. 2 is a diagram schematically showing the configuration of a welding apparatus (ultrasonic jointing machine) 30 used for production of the bag according to this embodiment.

As shown in FIG. 2, the ultrasonic jointing machine 30 comprises: an ultrasonic wave oscillator 32 to convert 50 Hz or 60 Hz commercial electricity to a high-frequency signal of about 15 to 70 KHz; a converter 34 to convert this signal to mechanical vibration; a booster 36 to amplify this mechanical vibration; a disc horn 38 to transmit the amplified vibration to a welding target; and a disc anvil 40 to nip two end sections 1a, 1a of the film 1 in cooperation with the horn 38.

In the ultrasonic jointing machine 30, each of the horn 38 and the anvil 40 is disc-shaped, and they are configured to be rotated while nipping the two end sections 1a, 1a of the film, thereby continuously forming the strip-shaped sealed portion 12 of the bag 10. The anvil 40 is provided with a groove 40a corresponding to the vent passage 20 in the strip-shaped sealed portion 12 of the bag 10.

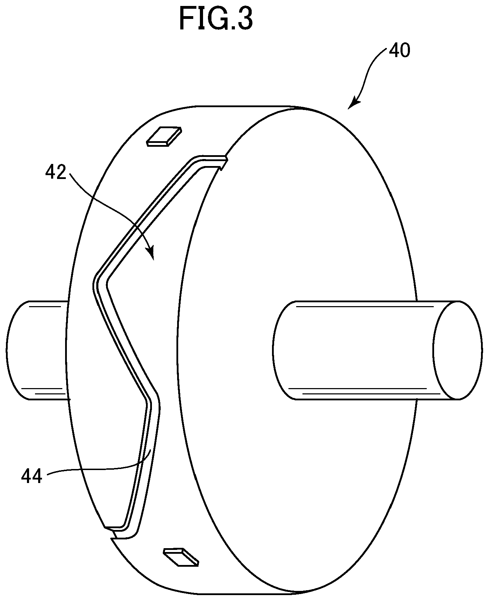

FIG. 3 is a schematic perspective view showing the configuration of the anvil 40 used in the ultrasonic jointing machine 30. The anvil 40 is disc-shaped, and has an outer peripheral surface 42 on which a groove 44 is formed, correspondingly to a plan-view shape of the vent passage 20 in the strip-shaped sealed portion 12 of the bag 10. On the other hand, the disc horn 38 has a smooth or even outer peripheral surface.

Alternatively, the groove may be provided on the outer peripheral surface of the horn. In this case, the anvil is formed to have an even outer peripheral surface.

The depth of the groove 44 is set to 0.2 mm to 1.0 mm. This depth is more preferably 0.25 mm to 0.8 mm, further preferably 0.3 mm to 0.5 mm. If the depth of the groove is less than 0.2 mm, the joining strength of the strip-shaped sealed portion is likely to become insufficient. On the other hand, if this depth is greater than 1.0 mm, the film is likely to be cut and separated along upper edges of the groove, thereby failing to successfully complete joining.

As the cross-sectional shape of the groove 44, a triangular shape is particularly preferable, because it can prevent the film from being cut and separated along the upper edges of the groove. However, the groove may have any cross-sectional shape such as a rectangular shape or a semicircular shape.

In the ultrasonic jointing machine 30, each of the horn 38 and the anvil 40 has a diameter of about 50 to 150 mm. Further, the outer peripheral surface of each of the horn 38 and the anvil 40 has a width of about 5 to 20 mm, correspondingly to the width of the strip-shaped sealed portion 12. As a material for the horn 38 and the anvil 40, any heretofore-known material may be used. In particular, it is desirable to use stainless steel or a titanium alloy.

Lateral edges of the outer peripheral surface of the anvil 40 may be chamfered. The chamfered edges make it possible to prevent the film from being cut and separated along the edges. Further, a side surface of the anvil 40 may be formed with a hole (recessed part) for the purpose of weight reduction.

The horn 38 and the anvil 40 are configured to be rotationally driven by a non-illustrated drive unit. Although a driving speed, i.e., a feed speed of the film, is not particularly limited, it may be preferably set to about 5 to 50 mm/sec. This rotational driving speed corresponds to a formation speed of the strip-shaped sealed portion 12.

This joining speed (driving speed) is set to 5 m/min to 50 m/min, more preferably 15 m/min to 45 m/min, further preferably 20 m/min to 40 m/min. The joining speed should be 5 m/min or more to allow for efficient production. If the joining speed is less than 5 m/min, excessive heat is applied to the joined portion, thereby causing difficulty in forming a vent passage with a uniform width, in some cases. Further, the joining speed should be 50 m/min or less to make it possible to obtain sufficient joining strength.

When nipping the end sections 1a, 1a of the film 1, a pressure of about 20 to 500 N is applied between the horn 38 and the anvil 40 by a non-illustrated pressure device.

During production of the bag 10, in a step of forming the strip-shaped sealed portion 12, the overlapped side end sections 1a, 1a of the double-folded film 1 are nipped between the horn 38 and the anvil 40, and applied with ultrasonic wav from the horn 38, while the horn 38 and the anvil 40 are rotationally driven, thereby forming the strip-shaped sealed portion 12.

After 60g to 500g of coffee is put into the inside of a bag 10 having one side edge along which the strip-shaped sealed portion 12 is formed in the above manner, and a lower edge along which the bottom sealed portion 16 is formed, the top sealed portion 14 is formed to close the bag 10, thereby storing the coffee.

The amount of coffee to be stored is preferably 80 g to 450 g, more preferably 100 g to 400 g. The amount of coffee should be set to 60 g or more to make it possible to prevent the rate of the amount of gas to the amount of coffee beans from becoming excessively large, thereby suppressing deterioration in equality of coffee. The amount of coffee should also be set to 500 g or less to make it possible to prevent the bag from expanding during storage.

In the present invention, nitrogen gas is preferably charged inside the bag 10 before forming the top sealed portion 14. After charging nitrogen gas, a certain amount of air may remain in the bag. Nitrogen gas should be charged into the bag 10 to make it possible to more reliably suppress deterioration in the quality of coffee.

It should be noted that the present invention is not limited to the above embodiment, but various changes and modifications may be made therein without departing from the spirit and scope thereof as set forth in appended claims.

The plan-view shape of the vent passage is not particularly limited. For example, the vent passage may be configured as a wave-shaped vent passage 42 as shown in FIG. 4.

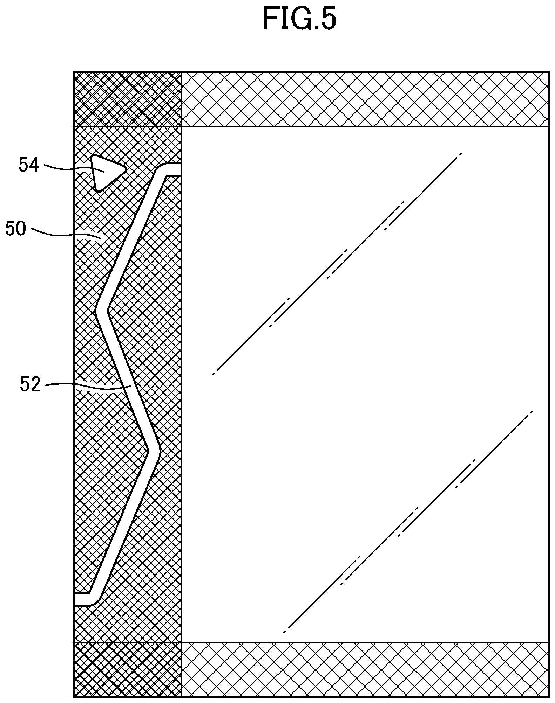

Further, as shown in FIG. 5, the strip-shaped sealed portion may be configured as a strip-shaped sealed portion 50 comprising a vent passage 52 and a non-joined portion 54 which does not constitute the vent passage 52. In this case, the area of the non-joined portion 54 which does not constitute the vent passage 52 is preferably set to 100% or less of the area of the vent passage 52.

Such a non-joined portion 54 which does not constitute the vent passage 52 is formed, e.g., by providing, on the outer peripheral surface of the anvil, a recess having a shape corresponding to the non-joined portion 54, in addition to a groove corresponding to the vent passage

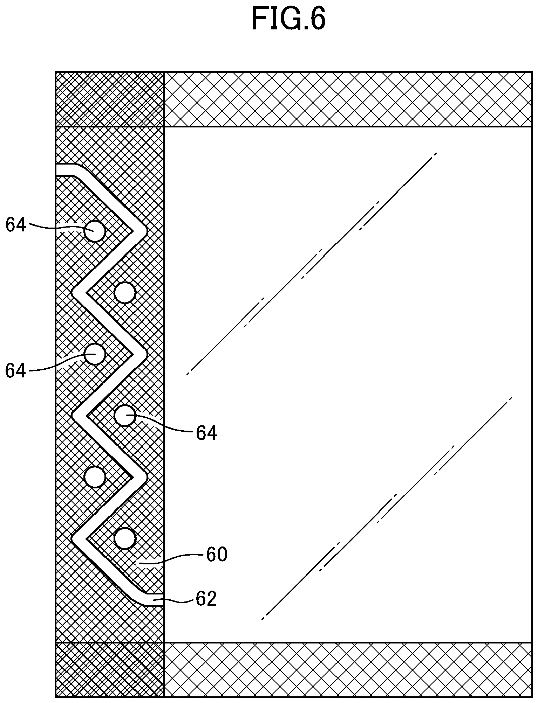

Further, as shown in FIG. 6, the strip-shaped sealed portion may be configured as a strip-shaped sealed portion 60 comprising a wave-shaped vent passage 62, and a plurality of non-joined portions 64 which do not constitute the vent passage.

In the embodiment illustrated in FIG. 1, the side sealed portion of the bag 10 is formed as the strip-shaped sealed portion having the vent passage. Alternatively, the configuration of the strip-shaped sealed portion 12 having the vent passage may be applied to another sealed portion such as the top sealed portion or the bottom sealed portion. For example, when using a cylindrical-shaped film, a strip-shaped sealed portion having a vent passage may be applied to a top sealed portion.

### [EXAMPLES]

Next, examples of the present invention will be described.

### (Example 1)

A barrier film (laminate film of a nylon film with a barrier layer/a low-density polyethylene film) having a width 30 cm, a length of 25 cm and a thickness of 85 µm was folded in two, and formed into a bag having a length of 25 cm and a width of 15 cm. A bottom sealed portion was formed as a 10 mm-width heat-sealed portion.

A side sealed portion of the bag was formed as the strip-shaped sealed portion in the present invention. Specifically, an anvil having a groove with a depth of 0.4 mm was used at a joining speed of 30 m/min to form a strip-shaped sealed portion having a vent passage with a shape illustrated in FIG. 4. The details of the strip-shaped sealed portion and the vent passage are as follows.

- Length of the strip-shaped sealed portion: 230 mm
- Width of the strip-shaped sealed portion: 10 mm (the strip-shaped sealed portion was formed inward of a line spaced from the side edge of the double-folded film by about 2 mm)
- Width of the vent passage; 1 mm
- Length of the vent passage: 140 mm
- Number of the vent passages: 1

100 g of coffee beans (Guatemala Peaberry) was put into the bag produced in the above manner, and immediately after charging nitrogen gas from a nitrogen cylinder to the inside of the bag, a 10 mm-width top sealed portion was formed by means of heat sealing to close the bag. In this state, the coffee were stored.

Storage Conditions: the filled bag was stored at a temperature of 15 to 18°C, and the state of the bag was evaluated after the elapse of a storage period.

The evaluation was performed in the following manner.

### < Degree of Expansion of Bag >

On the 7th day after filling, the degree of expansion of the bag was visually observed.
∘: There is no expansion of the bag.
△: The bag is slightly expanded, but can be placed on top of another bag.
×: The bag is expanded, and cannot be placed on top of another bag.
××: The bag is significantly expanded.

In view of practicality, ∘ or △ is an acceptable level.

### < Oxygen Concentration inside Bag >

On the 28th day after filling, the oxygen concentration inside the bag was measured.

### Oxygen Concentration

A: Oxygen concentration of less than 3 volume%
B: Oxygen concentration of 3 volume% to less than 6 volume%
C: Oxygen concentration of 6 volume% to less than 10 volume%
D: Oxygen concentration of 10 volume% or more

With regard to oxygen concentration, in view of practicality, A, B or C is an acceptable level.

### (Examples 2 to 13)

Except that the position of the vent passage, the shape of the vent passage, the number of the vent passages, the width of the vent passage, and the length of the vent passage were changed as shown in Table 1, Examples 2 to 13 was prepared, and subjected to storage, in the same manner as that for Example 1.

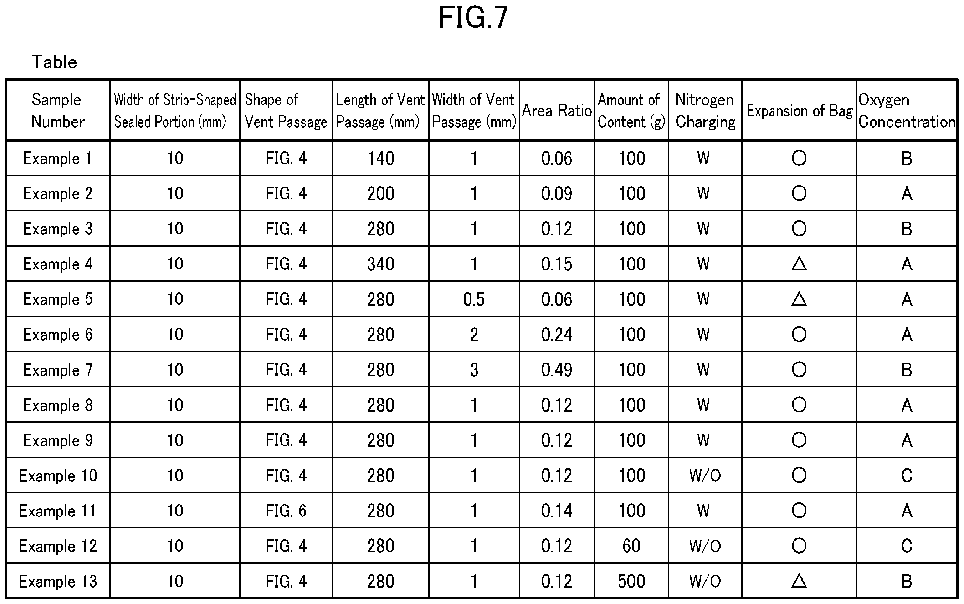

A result obtained by storing coffee using each of the Examples is shown in Table of FIG. 7.

The Table shows that in any bag having a vent passage with a length of 100 mm to 400 mm and a width of 0.5 mm to 3 mm, each of the value of the oxygen concentration and the expansion of the bag is at a practical level. Further, the oxygen concentration exhibited a lower value by performing nitrogen changing.

### LIST OF REFERENCE NUMERALS

1: film
10: bag
12: side sealed portion (strip-shaped sealed portion)
14: top sealed portion
16: bottom sealed portion
18: folded portion
20: vent passage
20a: one end of vent passage
30: welding apparatus (ultrasonic jointing machine)
20b: other end of vent passage
S: area of strip-shaped sealed portion
s: area of vent passage

## Claims

1. A coffee storage bag for storing 500 g or less of coffee, comprising
a strip-shaped sealed portion extending approximately parallel to an edge of the bag, formed by two end sections of a film are overlapped and joined together, and having a width of 5 mm to 15 mm, wherein the strip-shaped sealed portion includes a single non-joined portion in which the two overlapped end sections of the film is not joined together in part, wherein the non-joined portion forms a single vent passage communicating an inside and an outside of the bag, the vent passage having a length of 100 mm to 400 mm, and a width of 0.5 mm to 3 mm.

2. The coffee storage bag as recited in claim 1, wherein the film is composed of a barrier film.

3. The coffee storage bag as recited in claim 1 or 2, wherein a ratio of an area of the vent passage to an area of the strip-shaped sealed portion is 0.05 to 0.50.

4. The coffee storage bag as recited in any one of claims 1-3, wherein the strip-shaped sealed portion is an ultrasonically joined portion formed by joining the overlapped end sections of the film by means of ultrasonic joining.

5. A coffee storage method comprising the step of storing 60 g to 500g of coffee in the coffee storage bag as recited in any one of claims 1-4.

6. The coffee storage method as recited in claim 5, wherein the step of storing is performed in a state in which nitrogen gas is charged inside the bag.
